# EUROPEAN PATENT SPECIFICATION

(11) **EP 3 466 278 B1**
(45) Date of publication and mention of the grant of the patent: **03.07.2024**
(21) Application number: 18198937.7
(22) Date of filing: 05.10.2018
(51) Int. Cl.: A23L 33/115, A23D 7/01, C11C 3/10, A23L 9/20, A23D 7/02, A23D 7/00, A23D 7/005

(54) **IMITATION WHIPPING CREAM**
SCHLAGSAHNEERSATZ
SUBSTITUT DE CRÈME FOUETTÉE

(30) Priority: 06.10.2017 IT 201700112612
(43) Date of publication of application: 10.04.2019
(73) Proprietor: Unigra' S.p.A., 48017 Conselice (RA) (IT)
(72) Inventor: CESARI, Riccardo, 48017 CONSELICE (RA) (IT); GHERARDI, Alessandro, 48017 CONSELICE (RA) (IT); FUSARI, Massimo, 48017 CONSELICE (RA) (IT); GRAMIGNA, Lucia, 48017 CONSELICE (RA) (IT)
(74) Representative: Casci, Tamara

(56) References cited:
- WO-A1-2017/055101
- WO-A2-2010/149323
- US-A- 6 022 577
- US-A1- 2004 106 688
- US-A1- 2008 199 588
- SHASHI KUMAR C. ET AL: "Exploration of Shorea robusta (Sal) seeds, kernels and its oil", COGENT FOOD & AGRICULTURE, vol. 2, no. 1, 24 May 2016 (2016-05-24), XP055463621, DOI: 10.1080/23311932.2016.1186140

## Description

### Field of the Invention

The present invention relates in general to the sector of the food industry.

In particular, the invention relates to an imitation product of dairy whipping cream.

### Prior art

In the field, imitation products of dairy whipping cream are known, also known as vegetable whipping creams.

Such products, like their traditional counterpart, are liquid at ambient temperature and are usually distributed pasteurized or sterilized. To use it, the product is usually poured into a container and whipped at refrigerated temperature, with or without the addition of further ingredients. The whipped vegetable cream thus obtained can then be used for various applications common in confectionery, such as garnishing cakes, as well as domestic.

Currently, there is a certain number of formulations of vegetable creams available on the market, both in Italy and abroad. These products usually have a composition comprising water, sugar, proteins, emulsifiers, stabilizers and one or more vegetable oils, the latter usually in a percentage by weight of about 28% based on the weight of the composition.

However, most of these products comprise palm or palm kernel fats, and/or hydrogenated oils.

The fats used in the aforementioned products have in fact a lipidic profile that enables to obtain a composition that has characteristics of whipping and of stability of the whipped composition that are comparable with traditional dairy cream.

Patent application WO 2005/020713 A1 (Arnould et al.) describes a UHT 100% non-dairy whipping cream. The vegetable fat in the cream is hydrogenated palm kernel oil (mainly consisting of fatty acids with 12 carbon atoms - lauric acid).

Patent application EP 2 486 805 A1 (Puratos N.V.) describes a method for stabilizing an edible UHT-treated oil-in-water emulsion comprising the step of mixing a vegetable fat with an aqueous phase, the vegetable fat being enriched in trilaurin triglyceride.

The patent application WO 98/31236 A1 (Rich Products Corporation) describes a whipped food for decoration, fillings and frosting comprising a quantity of non-tropical lauric oils sufficient to provide thermal stability that have a triglyceride component comprising at least approximately 30% of lauric acid (with respect to the total content of triglycerides of lauric oil).

However, with regard to palm (and palm kernel) oil, for a few years there has been a trend by consumers in preferring products free of palm oil and palm kernel oil.

Moreover, it is known that lauric acid, like most medium-chain saturated fatty acids, is associated with an increase in the blood concentration of LDL (low density lipoproteins) and hence with a higher risk of cardiovascular diseases.

Patent application US 2008/0199588 A1 (Avramis et al.) describes a whipping cream comprising 18 wt% of a fat, the fat being Allanblackia fat.

Patent application WO 2010/149323 A2 (Cargill Incorporated, US) describes an optionally modified cocoa butter composition having a melting point of no more than 25 °C. The composition described can be used in a food, beverage, cosmetic or pharmaceutical, such as for example a liquid milk chocolate or a spread.

Patent US 6,022,577 (Chrysam et al.) describes a fat product, such as for example a low fat spread, having a solids content at 80 °F of at least about 4% and a solids content of at least about 1% at 92 °F consisting essentially of an interesterified blend of high stearic soybean oil and another oil or fat.

Patent application WO 2017/055101 (A1) (Loders Croklaan B.V., NL) describes a low SAFA fat composition for use in an aerated emulsion, such as a filling cream, wherein the composition comprises less than 35% by weight of SAFA based on the total weight of fatty acid residues; wherein the composition comprises from 2 to 8% by weight C12:0 and from 12 to 15% by weight C16:0; and wherein the composition is whippable to a stable cream with water without the addition of stabilizers.

Patent application US 2004/0106688 A1 (Kao Corporation, JP) describes a foamable oil-in-water type emulsion comprising: (A) from 3 to 50% by weight of an oil phase comprising fat or oil containing from 1 to 69.9% by weight of triglycerides, from 0.1 to 9% by weight of monoglycerides and from 30 to 90% by weight of diglycerides, wherein 80% by weight or more of the fatty acids in the diglycerides are unsaturated fatty acids, wherein less than 40% by weight of the fatty acids in the fat or oil are saturated fatty acids, and wherein less than 10% by weight of the fatty acids in the fat or oil are trans acids; and (B) from 50 to 97% by weight of a water phase, wherein the water phase comprises from 1 to 80% by weight of sugars, sugar alcohols, and mixtures thereof.

Shashi Kumar C. et *al.* (2016), (Shashi Kumar C. et al. (2016), "Exploration of Shorea robusta (Sal) seeds, kernels and its oils", Cogent Food & Agriculture, vol. 2, n. 1, 1186140) is a research article focusing on the properties of sal seeds, kernels and its oils. The article mentions the potential for using sal oil in confectionery products, as well as other food and non-food products.

Given consumer's growing awareness concerning health and nutrition, the need is felt in the food industry to make available a vegetable whipping cream (and a vegetable whipped cream) with a nutritionally improved lipidic profile, i.e. healthier, compared to prior art vegetable creams, and that at the same time exhibits satisfactory organoleptic and rheological characteristics, and that does not contain palm or palm kernel oil (or contains a low quantity thereof).

The technical problem underlying the present invention is therefore that of making available a product imitating dairy whipping cream (or vegetable whipping cream) that contains no palm and/or palm kernel oil, or that has a reduced content of palm and/or palm kernel oil, and that at the same time exhibits satisfactory organoleptic and rheological characteristics.

A further technical problem underlying the present invention is that of making available such a cream that comprises no hydrogenated fats, or that has a reduced content of hydrogenated fats.

A further technical problem underlying the present invention is that of making available such a cream that has a lower content of saturated fatty acids than prior art vegetable creams.

A further technical problem underlying the present invention is that of making available such a cream that exhibits an improved nutritional profile, i.e. healthier, compared to prior art vegetable creams.

A further technical problem underlying the present invention is that of making available such a cream that exhibits satisfactory whipping stability.

A further technical problem underlying the present invention is that of making available such a cream that reaches satisfactory overrun levels, for example greater than 100%.

### Summary of the invention

Such a problem has been solved according to the invention by an oil-in-water food emulsion comprising, in weight percent based on the total weight of the emulsion, between 15 and 45% of a fat phase, the fat phase comprising glycerides wherein at least 65% of the chains deriving from fatty acids, in weight percent based on the total of weight of the chains, are chains having 18 carbon atoms, wherein said glycerides represent the totality of the glycerides of said fat phase; and at least one emulsifier; wherein said fat phase comprises a mixture of: a vegetable fat as such or a vegetable oil as such A comprising glycerides wherein at least 65% of the chains deriving from fatty acids, in weight percent based on the total weight of said chains, are chains having 18 carbon atoms; and a vegetable fat or vegetable oil B obtained from the interesterification of a vegetable fat as such or vegetable oil as such comprising glycerides wherein at least 65% of the chains deriving from fatty acids, in weight percent based on the total weight of said chains, are chains having 18 carbon atoms; and wherein said food emulsion is a vegetable whipping cream; wherein said fat phase comprises, in weight percent based on the total weight of the glycerides, between 25 and 60% of monounsaturated symmetrical triglycerides; wherein said glycerides comprise, in weight percent based on the total weight of the glycerides, between 20 and 60% of stearic acid; wherein said vegetable fat as such or vegetable oil as such A and said vegetable fat or vegetable oil B obtained from interesterification of a vegetable fat as such or vegetable oil as such are present in said fat phase in a weight ratio comprised between 0.3 and 3; wherein said glycerides comprise, in weight percent based on the total weight of the glycerides, at least 95% of triglycerides; and wherein a vegetable fat as such or vegetable oil as such is a refined fat or a refined oil that has not been subjected to an interesterification process.

The expression "chains deriving from fatty acids" herein means the esterified fatty acids of the glyceride.

Said glycerides wherein at least 65% of the chains deriving from fatty acids, in weight percent based on the total weight of the chains, are chains having 18 carbon atoms represent the totality of the glycerides of the fat phase. The "chains deriving from fatty acids" are to be intended as the totality of the chains deriving from fatty acids present in the aforesaid glycerides of the fat phase.

The expressions "stearic acid", "oleic acid", and "palmitic acid" shall hereafter mean the ester of stearic acid, of oleic acid, and of palmitic acid, respectively.

Preferably, the emulsion is substantially free of oils and/or fats of animal origin or has a content of oils and/or fats of animal origin, in weight percent based on the total weight of the emulsion, equal to or lower than 5%.

The expressions "oils and/or fats of animal origin" here mean "oils of animal origin and/or fats of animal origin".

Advantageously, the emulsion is an imitation product of dairy whipping cream. The imitation product has whipping and whipping stability characteristics comparable to those of a traditional dairy whipping cream. Hereafter, reference will be made to said product also as a "vegetable cream" or "vegetable whipping cream".

The term "whipping" means the incorporation of air in the emulsion with the obtention of an emulsion of increased volume.

Preferably, the glycerides comprise, in weight percent based on the total weight of the chains deriving from fatty acids, at least 95%, more preferably at least 97%, even more preferably at least 99%, most preferably about 100%, of chains deriving from a vegetable oil and/or fat.

The expression "vegetable oil and/or fat" herein means "vegetable oil and/or vegetable fat".

Preferably, the glycerides comprise, in weight percent based on the total weight of the chains deriving from fatty acids, between 70 and 950, more preferably between 75 and 90%, most preferably between 80 and 85% of chains with 18 carbon atoms deriving from fatty acids.

Preferably, the glycerides comprise, in weight percent based on the total weight of the chains deriving from fatty acids, between 25 and 550, more preferably between
30 and 50% of stearic acid.

Preferably, the glycerides comprise, in weight percent based on the total weight of the chains deriving from fatty acids, between 25 and 60%, more preferably between 28 and 45%, most preferably between 30 and 42%, of oleic acid.

Preferably, the glycerides comprise, in weight percent based on the total weight of the chains deriving from fatty acids, between 2 and 40%, more preferably between 3 and 35%, most preferably between 4 and 30%, of palmitic acid.

Preferably, the glycerides comprise, in weight percent based on the total weight of the chains deriving from fatty acids, less than 10%, more preferably less than 5%, even more preferably less than 1%, most preferably less than 0.5% of chains having less than 16 carbon atoms deriving from saturated fatty acids.

Preferably, the glycerides comprise, in weight percent based on the total weight of the chains deriving from fatty acids, between 0.1 and 10%, more preferably between 0.3 and 9%, even more preferably between 0.5% and 8% of chains having a number of carbon atoms equal to or greater than 20 deriving from saturated fatty acids.

Preferably, the glycerides comprise, in weight percent based on the total weight of the chains deriving from fatty acids, less than 85%, more preferably between 40 and 75%, even more preferably between 50 and 65%, of chains deriving from saturated fatty acids.

Preferably, glycerides comprise, in weight percent based on the total weight of the chains deriving from fatty acids, at least 30%, more preferably at least 35%, still more preferably at least 40% of chains deriving from saturated fatty acids.

Preferably, the glycerides comprise, in weight percent based on the total weight of the chains deriving from fatty acids, a content equal to or lower than 5%, more preferably a content equal to or lower than 3%, of chains deriving from fatty acids of palm oil and/or of palm kernel oil.

In a preferred embodiment, the glycerides are substantially free of chains deriving from fatty acids of palm oil and/or of palm kernel oil.

Preferably, the glycerides comprise, in weight percent based on the total weight of the chains deriving from fatty acids, a content equal to or lower than 5%, more preferably a content equal to or lower than 3%, of chains deriving from fatty acids of a hydrogenated fat.

In a preferred embodiment, the glycerides are substantially free of chains deriving from fatty acids of a hydrogenated fat.

Preferably, the fat phase comprises, in weight percent based on the total weight of the glycerides, between 30 and 550, of monounsaturated symmetrical triglycerides.

The expression "monounsaturated symmetrical triglycerides" herein means the triglycerides in which positions 1 and 3 of the glycerol are occupied by a saturated fatty acid and position 2 of the glycerol (i.e. the central position) is occupied by a monounsaturated fatty acid.

Preferably, the fat phase comprises, in weight percent based on the total weight of the glycerides, between 10 and 45%, more preferably between 15 and 40%, even more preferably between 20 and 32% of symmetrical triglycerides in which the positions 1 and 3 of the glycerol are occupied by the same saturated fatty acids.

The concentrations of the different triglycerides can be determined by means of techniques that are known in the field, for example by means of chromatographic analyses.

In particular, a first chromatographic analysis, according to techniques known to the person skilled in the art, can be carried out on the sample of fat or oil to be tested to divide the sample in four fractions in which a first fraction contains the POP, PPO and POO triglycerides; a second fraction contains the SOO, PPP, POS, PSO and SPO triglycerides; a third fraction contains the SOS and SSO triglycerides (in which P=palmitic acid, O=oleic acid, S=stearic acid); and a fourth fraction contains all triglycerides not present in the aforementioned fractions from the first to the third. Concurrently, the first chromatographic analysis provides the values of the concentrations of the triglycerides in the fourth fraction.

With a second chromatographic analysis on each of the fractions from the first to the third, according to techniques known to the person skilled in the art, for each of them the concentration of triglycerides present is determined.

The person skilled in the art is able to determine the appropriate analysis parameters for this purpose.

The concentrations of fatty acids in a sample can be determined by techniques that are known in the field, for example by means of gas chromatography according to the method described in ISO 5508:2012 *("Animal and vegetable fats and oils. Analysis by gas chromatography of methyl esters of fatty acids*").

Preferably, the fat phase comprises, in weight percent based on the total weight of the fat phase, at least 95% of glycerides, more preferably at least 96% of glycerides, even more preferably at least 98% of glycerides, most preferably about 100% of glycerides.

Preferably, the glycerides of the fat phase comprise, in weight percent based on the total weight of the glycerides, at least 97.5% of triglycerides, even more preferably at least 98% of triglycerides, even more preferably at least 99% of triglycerides, even more preferably at least 99.5% of glycerides.

Preferably, the fat phase has a melting point comprised between 30 and 60 °C, more preferably comprised between 30 and 58 °C, even more preferably comprised between 30 and 55 °C, even more preferably comprised between 30 and 45 °C, even more preferably comprised between 34 and 40 °C, even more preferably comprised between 35 and 38 °C.

The melting point of the fat phase can be determined according to techniques known in the field, for example by measuring the melting point in open capillary tube, i.e. the slip point.

The slip point of the fat phase can be determined according to techniques known in the field, for example by the method AOCS Cc 3b-92, Method A, based on the international method ISO 6321 (ISO 6321:1991). The method entails the immersion of open capillary tubes containing a column of fat, crystallized in controlled conditions specified in the method, in a water bath whose temperature is increased at a determined rate. The slip point corresponds to the temperature in which the column of fat starts to rise in the capillary tube.

Preferably, the emulsion comprises, in weight percent based on the total weight of the emulsion, between 18 and 30%, more preferably between 20 and 28%, even more preferably between 21 and 250 of the fat phase.

The fat phase comprises a mixture of: a vegetable fat or oil as such A comprising glycerides wherein at least 65% of the chains deriving from fatty acids, in weight percent based on the total weight of the chains, are chains having 18 carbon atoms; and a vegetable fat or oil B obtained from the interesterification of a vegetable fat or oil as such comprising glycerides wherein at least 65% of the chains deriving from fatty acids, in weight percent based on the total weight of the chains, are chains having 18 carbon atoms.

The expression "vegetable fat or oil as such" herein means "vegetable fat as such or vegetable oil as such".

The expression "vegetable fat or oil as such" herein means a refined fat or oil that has not been subjected to an interesterification process.

Preferably, the fat or oil is extracted from a seed or fruit of a plant that is not the result of genetic engineering techniques directed at modifying the profile of the of the fatty acid content of the fat or oil with respect to the original plant.

Preferably, the vegetable fat or oil as such A and the vegetable fat or oil B obtained from interesterification of a vegetable fat or oil as such are present in the fat phase in a ratio comprised between 0.4 and 1.5.

The term "interesterification" herein means the process of rearrangement of the fatty acids in the glycerides that constitute a fat or oil.

The interesterification process must be understood as completed, i.e. the interesterification reaction must have reached equilibrium.

In particular, it is meant herein that interesterification is carried out on only one vegetable fat or oil.

Preferably, the vegetable fat or oil as such is of botanical origin selected from cocoa, sal, shea, illipe, mango, kokum, mowrah, phulwara, or mixtures thereof, more preferably cocoa or sal.

Preferably, the vegetable fat or oil as such is extracted from the seed and/or from the fruit.

Preferably, in the fat phase, the vegetable fat or oil B is obtained from the interesterification of a fat or oil corresponding to the vegetable fat or oil as such A.

In a preferred embodiment, the vegetable fat as such or vegetable oil as such A is cocoa butter as such and the vegetable fat or vegetable oil B obtained from the interesterification of a vegetable fat as such or vegetable oil as such is interesterified cocoa butter, preferably in a weight ratio between the cocoa butter as such and the interesterified cocoa butter comprised between 0.1 and 1, more preferably comprised between 0.3 and 0.8, even more preferably comprised between 0.5 and 0.75.

Preferably, the fat phase consists of cocoa butter (as such) and interesterified cocoa butter.

In an alternative preferred embodiment, the vegetable fat as such or vegetable oil as such A is sal butter (*Shorea robusta*) as such and the vegetable fat or vegetable oil B obtained from the interesterification of a vegetable fat as such or vegetable oil as such is interesterified sal butter, preferably in a weight ratio between the sal butter as such and the interesterified sal butter comprised between 0.1 and 1, more preferably comprised between 0.3 and 0.8, even more preferably comprised between 0.5 and 0.75.

Preferably, the fat phase consists of sal butter (as such) and interesterified sal butter.

Preferably, the fat phase has a solid fat content (SFC) comprised between 50 and 75% at 0 °C.

Preferably, the fat phase has a solid fat content (SFC) comprised between 30 and 70% at 10 °C.

Preferably, the fat phase has a solid fat content (SFC) comprised between 20 and 50% at 20 °C.

Preferably, the fat phase has a solid fat content (SFC) comprised between 20 and 40% at 25 °C.

Preferably, the fat phase has a solid fat content (SFC) comprised between 15 and 30% at 30 °C.

Preferably, the fat phase has a solid fat content (SFC) comprised between 10 and 20% at 35 °C.

Preferably, the fat phase has a solid fat content (SFC) comprised between 50 and 75% at 0 °C, comprised between 30 and 70% at 10 °C, between 20 and 50% at 20 °C, comprised between 20 and 40% at 25 °C, comprised between 15 and 30% at 30 °C and comprised between 10 and 20% at 35 °C.

The solid fat content can be measured by means of a method that enables to determine the content of fat in crystalline phase (hence solid) with respect to total fat, consisting in addition to the crystalline phase, of a liquid phase, at different temperatures.

The solid fat content can be measured for example according to the method IUPAC 2.150 (ex 2.323) ("Solid content determination in fats by NMR (Low resolution nuclear magnetic resonance)", for example according to point (a) ("Methods for routine use without special thermal pretreatment") in serial measurement ("Procedure 6.2.2.2") and NMR "continuous wave" mode.

Preferably, the emulsion has viscosity (K), measured with the method described below, comprised between 0.05 and 2, more preferably comprised between 0.1 and 1.5, even more preferably comprised between 0.2 and 1.

Viscosity is measured with Thermo Scientific HAAKE RheoStress 6000 rheometer (Rheology Solutions Pty Ltd, Australia) adopting a "double gap" geometry and composed of a cylindrical rotor, code CC27 DV, with outer diameter of 26.604 mm, inner diameter of 21.276 mm, height of the lumen 40.020 mm and of a cup, code CCB27 DG, with diameter of 27.203 mm and diameter of the inner cylinder of 20.810 mm. The value of viscosity K is represented by the slope of the straight line produced by the analysis with the rheometer.

Preferably, the emulsion comprises an aqueous phase.

Preferably, the emulsifier is present in the emulsion in a percentage, by weight based on the weight of the sum of the fat phase and of the aqueous phase, comprised between 0.05 and 2%, more preferably comprised between 0.1 and 1.5%, even more preferably comprised between 0.2 and 1.0%, most preferably comprised between 0.3 and 0.8%.

Preferably, the emulsifier is chosen between a surfactant having a value of HLB (Hydrophilic Lipophilic Balance) comprised between 8 and 15. The value of HLB is the index of the solubility of the emulsifier in water and/or oil. The value of HLB can be determined according to the methods known in the art that are based on molecular structure and in which HLB = Σ (number of hydrophilic groups)- Σ (number of lipophilic groups) + 7. The aforesaid number associated with the different hydrophilic and lipophilic groups present in the molecular structure of the emulsifier can be derived from dedicated tables. Generally, an emulsifier with HLB comprised between 3.5 and 6 leads to the formation of a water in oil emulsion, while an emulsifier with HLB comprised between 8 and 18 leads to the formation of an oil-in-water emulsion. An example of method for measuring the HLB is described in H. T. Davis, Colloids and Surfaces A: Physicochemical and Engineering Aspects, 1994, vol 91, 9-24.

Preferably, the emulsifier is chosen from mono-and diacetyl tartaric esters of mono- and diglycerides of fatty acids (Datem, E472e), lactic acid esters of mono and diglycerides (E472b), mono- and diglycerides of fatty acids (for example glyceryl monostearate, glyceryl distearate, E471), sucrose esters of fatty acids (E473), stearoyl 2-lactylate (sodium salt, E481), polyglycerol esters of fatty acids (E475), polyoxyethylene sorbitan mono-oleate (20) (polysorbate 80) E433), polyoxyethylene sorbitan monostearate (20) (polysorbate 60), (E43, lecithin (E322), and mixtures thereof, more preferably mono- and diacetyl tartaric esters of mono-and diglycerides of fatty acids (Datem, E472e) .

Food additives can be identified by the numeric code based on the European classification of food additives, reported above in parentheses.

The emulsifier has the function of stabilizing the emulsion and increasing the volume of air incorporated by the emulsion during the whipping step.

Preferably, the emulsion consists of a fat phase, an aqueous phase and at least one emulsifier.

Preferably, the emulsion comprises, in weight percent based on the total weight of the emulsion, between 53 and 83%, more preferably between 68 and 81%, even more preferably between 71 and 79%, most preferably between 74 and 78% of an aqueous phase.

Preferably, the emulsion comprises one or more additional ingredients, more preferably chosen from proteins; stabilizer and/or thickener; sweetener; salt; flavoring and/or coloring agent; and mixtures thereof.

Preferably, the one or more additional ingredients are present in the fat phase and/or in the aqueous phase.

Preferably, proteins; stabilizer and/or thickener; sweetener; salt; and flavoring and/or coloring agent are included in the aqueous phase.

Preferably, the proteins are present in the emulsion in a percentage, by weight based on the weight of the sum of the fat phase and of the aqueous phase, comprised between 0.05 and 5%, more preferably comprised between 0.1 and 2%, even more preferably comprised between 0.2 and 1%.

Preferably, the proteins are chosen from milk proteins, proteins deriving from cereals, proteins deriving from legumes, and mixtures thereof, more preferably milk proteins, even more preferably caseinates and/or serum proteins.

Proteins have the function of increasing the volume of air incorporated by the emulsion upon whipping and stabilizing the emulsion following whipping.

Preferably, the stabilizer and/or thickener is present in the emulsion in a percentage, by weight based on the weight of the sum of the fat phase and of the aqueous phase, comprised between 0.05 and 5%, more preferably comprised between 0.1 and 2%, still more preferably comprised between 0.2 and 1%.

Preferably, the stabilizer and/or thickener is chosen from hydroxypropyl cellulose (E463A), microcrystalline cellulose (E460) carboxymethyl cellulose (E466), alginate (E401), guar gum (E412), locust bean gum (E410), carageenans (E407), tara gum (E417), gellan gum (E418), xanthan gum (E415), and mixtures thereof, more preferably hydroxy propyl cellulose (E463).

The stabilizer and the thickener, thanks to their ability to bind to water and form a three-dimensional network, have the function of improving the viscosity of the emulsion and of stabilizing it following whipping. It also increases the volume of air incorporated in the emulsion upon whipping.

Preferably, the sweetener is chosen from sucrose, glucose, fructose, maltose, lactose, sorbitol, and mixtures thereof, and related syrups more preferably sucrose and/or fructose, even more preferably sucrose.

Preferably, the sweetener is present in the emulsion in a percentage, by weight based on the weight of the sum of the fat phase and of the aqueous phase, comprised between 5 and 40%, more preferably comprised between 8 and 30%, even more preferably comprised between 12 and 18%.

Preferably, the salt is chosen from chlorides (for example, sodium chloride), phosphates, citrates and mixtures thereof, more preferably chlorides, still more preferably sodium chloride.

Preferably, the salt is present in a concentration, in weight percent based on the weight of the sum of the fat phase and of the aqueous phase, equal to or lower than 0.5%, more preferably equal to or lower than 0.2%.

The purpose of the salt is to improve the flavor of the emulsion and/or buffer the pH.

Preferably, the flavoring and/or coloring agents are present in a concentration, in weight percent based on the weight of the sum of the fat phase and of the aqueous phase, equal to or lower than 3%, more preferably equal to or lower than 1%.

Preferably, the emulsion comprises proteins, a stabilizer and/or thickener, a sweetener, a salt and water.

In a preferred embodiment, the emulsion comprises cocoa butter, interesterified cocoa butter, an emulsifier, a stabilizer and/or thickener, proteins, a sweetener, a salt and water.

Preferably, the emulsion consists of cocoa butter, interesterified cocoa butter, an emulsifier, a stabilizer and/or thickener, proteins, a sweetener, a salt and water.

In an alternative preferred embodiment, the emulsion comprises sal butter, interesterified sal butter, an emulsifier, a stabilizer and/or thickener, proteins, a sweetener, a salt and water.

Preferably, the emulsion consists of sal butter, interesterified sal butter, an emulsifier, a stabilizer and/or thickener, proteins, a sweetener, a salt and water.

The terms "butter" and "fat" are to be construed as equivalent terms. The choice of one or of the other is dictated by the terminology conventionally used for each case.

Preferably, the pH of the emulsion is comprised between 6 and 7.5, more preferably comprised between 6.4 and 6.9.

In an embodiment, the emulsion is shelf-stable, more preferably sterilized.

The expression "shelf-stable" herein means a shelf life of at least 6 months at ambient temperature, without any microbiological, rheological, physical and organoleptic deterioration of the emulsion, including its whipping characteristics.

Preferably, the emulsion keeps at ambient temperature for at least 6 months, more preferably 9 months, even more preferably at least one year.

In an alternative embodiment, the emulsion is pasteurized and is stored at refrigeration temperatures. Preferably, the pasteurized emulsion is keeps for at least 5 days, more preferably for at least 10 days, more preferably for at least 15 days at 4 °C without any microbiological, rheological, physical and organoleptic deterioration of the emulsion, including its whipping characteristics.

Preferably, the emulsion is able to form an emulsion with air, stable in time for at least 24 hours at 20 °C. In other words, the emulsion is able to incorporate air thus increasing in volume, in a stable manner for the time indicated above.

Preferably, the emulsion is substantially free of palm and/or palm kernel oil or it has, in weight percent based on the weight of the emulsion, a content of palm and/or palm kernel oil equal to or lower than 1.5%, more preferably equal to or lower than 0.5%.

Preferably, the emulsion is substantially free hydrogenated fats or it has, in weight percent based on the weight of the emulsion, a content of hydrogenated fats equal to or lower than 1.5%, more preferably equal to or lower than 0.5%.

Preferably, the emulsion is substantially free of palm oil, palm kernel oil and hydrogenated fats.

The present invention further relates to the whipped emulsion or whipped vegetable cream obtainable by whipping the emulsion of the present invention.

Preferably, the whipped emulsion has an overrun of at least 100%, more preferably comprised between 100% and 300%, even more preferably comprised between 180% and 250%, still more preferably comprised between 200 and 240%.

Preferably, the whipped emulsion has an overrun equal to or lower than 250%.

The term "overrun" means the volume of emulsion obtained in excess with respect to the initial emulsion volume.

The term "overrun percentage" herein means the percentage of the volume of emulsion obtained in excess with respect to the initial emulsion volume. The "overrun percentage" (% overrun) is calculated in the following way: % overrun = [(final volume - after whipping) - (initial volume - before whipping)/ (initial volume - before whipping)]*100

Preferably, the whipped emulsion has density comprised between 0.25 and 0.5 Kg/m³, more preferably comprised between 0.28 and 0.4 Kg/m³, even more preferably comprised between 0.30 and 0.35 Kg/m³.

Preferably, the whipped emulsion is stable at 20 °C for a time of at least 24 hours, more preferably for at least 30 hours, even more preferably for at least 36 hours.

The stability of the whipped emulsion is defined as the ability to avoid syneresis phenomena of the aqueous phase and/or coalescence of the fat phase.

The stability of the whipped emulsion is measured placing the whipped cream on a filter, in turn positioned on a graduated cylinder in temperature conditions of 20 °C and measuring the quantity of liquid produced by effect of syneresis, after 24 hours. The whipped emulsion is considered stable until it produces a volumetric percentage quantity of liquid of 5% with respect to the starting whipped emulsion.

The present invention further relates to a process for the production of an oil-in-water emulsion of the invention, which comprises the steps of:
a) making available a fat phase comprising glycerides wherein at least 65% of the chains deriving from fatty acids, in weight percent based on the total weight of the chains, are chains having 18 carbon atoms, wherein said glycerides represent the totality of the glycerides of said fat phase;
b) mixing the fat phase of step a) with an aqueous phase, at a temperature comprised between 50 and 90 °C, until a mixture is formed;
c) homogenizing the mixture thus obtained thus forming an emulsion; and
d) cooling the emulsion thus obtained;
wherein said fat phase of step a) is obtained by mixing a vegetable fat as such or vegetable oil as such A comprising glycerides wherein at least 65% of the chains deriving from fatty acids, in weight percent based on the total weight of the chains, are chains having 18 carbon atoms and a vegetable fat or vegetable oil B obtained from the interesterification of a vegetable fat as such or vegetable oil as such comprising glycerides wherein at least 65% of the chains deriving from fatty acids, in weight percent based on the total weight of the chains, are chains having 18 carbon atoms; wherein said fat phase comprises, in weight percent based on the total weight of the glycerides, between 25 and 60% of monounsaturated symmetrical triglycerides; wherein said glycerides comprise, in weight percent based on the total weight of the glycerides, between 20 and 60% of stearic acid; wherein said vegetable fat as such or vegetable oil as such A and said vegetable fat or vegetable oil B obtained from interesterification of a vegetable fat as such or vegetable oil as such are present in said fat phase in a weight ratio comprised between 0.3 and 3; wherein said glycerides comprise, in weight percent based on the total weight of the glycerides,at least 95% of triglycerides; and wherein a vegetable fat as such or vegetable oil as such is a refined fat or a refined oil that has not been subjected to an interesterification process. The fat phase of step a) is obtained by mixing a vegetable fat or oil as such A comprising glycerides wherein at least 65% of the chains deriving from fatty acids, in weight percent based on the total weight of the chains, are chains having 18 carbon atoms and a vegetable fat or oil B obtained from the interesterification of a vegetable fat or oil as such comprising glycerides wherein at least 65% of the chains deriving from fatty acids, in weight percent based on the total weight of the chains, are chains having 18 carbon atoms.

Preferably, the vegetable fat or oil as such A and the vegetable fat or oil B obtained from interesterification of a vegetable fat or oil as such are present in the fat phase in a ratio comprised between 0.1 and 1 more preferably comprised between 0.3 and 0.8, even more preferably comprised between 0.5 and 0.75.

Preferably, the interesterification is enzymatic and/or chemical, preferably chemical.

Preferably, the interesterification is chemical and comprises the addition of an alkaline catalyst, more preferably chosen in the group of the alcoholates, more preferably sodium methoxide.

Preferably, the interesterification is carried out at a temperature comprised between 80 and 120 °C, more preferably comprised between 90 and 110 °C.

Preferably, the interesterification is carried out in a vacuum.

Preferably, the interesterification is carried out until interesterification is completed, more preferably for a time comprised between 15 and 180 minutes, more preferably between 30 and 150 minutes, even more preferably for a time comprised between 60 and 120 minutes.

The determination of the completion of the interesterification is within the ability of the person skilled in the art and it can be accomplished, for example, by comparing the values for the slip point and the SFC (solid fat content) profile with respect to a reference standard of the completely interesterified fat or oil.

Preferably, the process comprises a step of adding an emulsifier.

Preferably, step b) is preceded by the addition of an emulsifier to the fat phase.

The emulsifier can be added, alternatively, to the mixture obtained from the mixing step b) or it can be added before or during the homogenization step c).

Preferably, the mixing step b) is carried out at a temperature comprised between 60 and 80 °C.

Preferably, the aqueous phase of step b) comprises one or more between a stabilizer and/or thickener, proteins, a sweetener, a salt, a coloring agent and a flavoring agent.

Preferably, in step b), the fat phase is present in the emulsion in a concentration in weight percent based on the total weight of the emulsion, comprised between 18 and 30%, more preferably between 20 and 28%, even more preferably between 21 and 25%.

Preferably, the homogenizing step c) is carried out at a pressure comprised between 100 and 300 bar, more preferably between 150 and 250 bar.

Preferably, the homogenizing step c) is carried out at a temperature comprised between 40 and 80 °C, more preferably comprised between 45 and 60 °C.

Preferably, the step d) of cooling the emulsion thus obtained is carried out at a temperature below 20 °C.

Preferably, the cooling step d) is preceded by a heat treatment step of the mixture obtained in step b) or of the emulsion obtained in step c), more preferably a pasteurization or a sterilization step.

In a preferred embodiment, the heat treatment step is a sterilization, more preferably at a temperature comprised between 120 and 160 °C, even more preferably comprised between 130 and 155 °C, most preferably comprised between 135 and 150 °C for a time comprised between 2 and 60 seconds, more preferably comprised between 2 and 15 seconds, most preferably comprised between 2 and 6 seconds.

Preferably, the sterilization is a UHT sterilization.

In a preferred embodiment, the heat treatment step is a pasteurisation, more preferably at a temperature comprised between 65 and 90 °C, even more preferably comprised between 75 and 85 °C, most preferably comprised between 78 and 82 °C for a time comprised between 5 and 30 seconds, more preferably comprised between 10 and 20 seconds, most preferably comprised between 12 and 15 seconds.

Preferably, the homogenization step c) or the cooling step d) is followed by a step of packaging the emulsion thus obtained.

Herein described is the use of the emulsion of the invention for the production of a food vegetable cream.

Herein described is a fat phase comprising glycerides wherein at least 65% of the chains deriving from fatty acids, in weight percent based on the total weight of the chains, are chains having 18 carbon atoms, for the production of a food vegetable cream.

The present invention further relates to the use of a fat phase comprising glycerides wherein at least 65% of the chains deriving from fatty acids, in weight percent based on the total weight of the chains, are chains having 18 carbon atoms, wherein said glycerides represent the totality of the glycerides of said fat phase; and which comprises a mixture of: a vegetable fat as such or vegetable oil as such A comprising glycerides wherein at least 65% of the chains deriving from fatty acids, in weight percent based on the total weight of said chains, are chains having 18 carbon atoms; and a vegetable fat or vegetable oil B obtained from the interesterification of a vegetable fat as such or vegetable oil as such comprising glycerides wherein at least 65% of the chains deriving from fatty acids, in weight percent based on the total weight of said chains, are chains having 18 carbon atoms, for the production of a food vegetable cream; wherein said food vegetable cream is a vegetable whipping cream; wherein said fat phase comprises, in weight percent based on the total weight of the glycerides, between 25 and 60% of monounsaturated symmetrical triglycerides; wherein said glycerides comprise, in weight percent based on the total weight of the glycerides, between 20 and 60% of stearic acid; wherein said vegetable fat as such or vegetable oil as such A and said vegetable fat or vegetable oil B obtained from interesterification of a vegetable fat as such or vegetable oil as such are present in said fat phase in a weight ratio comprised between 0.3 and 3; wherein said glycerides comprise, in weight percent based on the total weight of the glycerides,at least 95% of triglycerides; and wherein a vegetable fat as such or vegetable oil as such is a refined fat or a refined oil that has not been subjected to an interesterification process.
Herein described but not pe se part of the present invention is also a fat phase as described above.

Herein described is the use of the food vegetable cream of the present invention for the preparation of food products.

Finally, the present invention refers to the use of the food emulsion of the present invention for the preparation of food products.

Preferably, the food products are desserts, more preferably selected from cakes, bakery products, chilled desserts, ice creams.

It has been found in fact that the emulsion of the invention allows to obtain a whipped cream that has optimal organoleptic characteristics and improved nutritional properties with respect to the corresponding vegetable-based products of the prior art.

It has in fact surprisingly been found that a fat phase with high content of fatty acids with 18 carbon atoms confers to the emulsion of the invention, and hence to the whipped cream obtained starting from the emulsion, optimal organoleptic and rheological characteristics, comparable respectively to those of the conventional whipping and whipped creams of the prior art.

According to a preferred embodiment, these conditions are obtained by mixing a portion of a fat or oil with high content of chains with 18 carbon atoms, in particular stearic acid, for example cocoa butter or sal butter, with a portion of an interesterified fat or oil with high content of chains with 18 carbon atoms, in particular stearic acid.

Interesterification has the effect of reducing the number of monounsaturated symmetrical triglycerides and increasing the number of non-monounsaturated symmetrical triglycerides in a mixture of triglycerides deriving from an oil or fat as such. This condition enhances the rheological properties of the emulsion, and hence its characteristics of whipping and stability of the whipped emulsion.

The Applicant has in fact observed that while a highly polymorphic fat or oil, such as for example cocoa butter as such, is not suitable for the preparation of vegetable whipping creams, the presence of a non-polymorphic oil or fat has the effect of making a fat phase suitable from the rheological viewpoint for whipping, both in terms of whipping and of stability of the cream before and after whipping.

The emulsion obtained thus lends itself to be whipped with excellent characteristics of whipping stability.

This characteristic is confirmed by the experimental tests that have been carried out on the whipped cream of the invention, which demonstrated that the whipped cream shows a stability (at a temperature of 20 °C after 24 hours) comparable to that of commercial whipped UHT creams (see Example 6). Moreover, the time the emulsions of the invention take to incorporate the sufficient quantity of air to obtain an optimal whipping is comparable to the time taken to whip commercial UHT creams (for example 410 and 440 seconds, see Example 5).

A comparison between the cream of the invention and those of the prior art on the basis of the solid fat content (SFC) content measured both with the normal method and with the tempering method further confirms the specific features of the cream of the present invention (see Examples 1 and 2).

The whipped cream obtained with the emulsion of the present invention also has excellent texture features, being homogeneous and soft to the palate. Upon tasting, no undesired granularity is perceived. The color is also satisfactory, being a white comparable to that of conventional dairy cream.

From a nutritional viewpoint, the emulsion of the present invention can have a relatively high stearic acid content. The emulsion of the invention can also have a relatively high oleic acid content.

This is in contract with the corresponding products of the prior art, i.e. emulsion for vegetable whipping cream based on vegetable oils, which usually have a preponderance of palmitic acid and lauric acid.

However, it is known that an excess of saturated fatty acids in the diet is associated with an increased risk of cardiovascular diseases, and in particular, this association has been demonstrated for long chain saturated fatty acids (C14:0, C16:0) with the exception of stearic acid (C18:0). The lauric acid (C12:0), although not associated with atherogenic effect, raises cholesterol levels, as does C14:0 (myristic acid).

It is known that stearic acid is considered poorly atherogenic because the body desaturates it, converting it into oleic acid.

The emulsion of the present invention therefore has the advantage of having a lipidic profile that not only is not considered harmful to health, but that can even be considered beneficial.

Oleic acid is a monounsaturated fatty acid, the most representative fatty acid of olive oil, whose beneficial properties for health are recognized.

Moreover, the formulation of the present invention has a reduced quantity of saturated fatty acids with respect to the average of the vegetable creams of the prior art.

### Brief description of the figures

Figure 1 is a photo that shows the set-up of a whipped cream stability test.
Figure 2 is a chart showing the result of a rheological stability test on the emulsion of Example 3 before whipping.

### Detailed description of the invention

The invention shall now be further described with reference to embodiments provided for illustrative and non-limiting purposes.

### EXAMPLE 1

### Preparation of the fat phase based on cocoa butter and interesterified cocoa butter

600 g of cocoa butter were placed in a reactor provided with stirring means. The cocoa butter was then heated to 100 °C under continuous stirring in vacuum conditions.

Sodium methoxide was then added in catalytic quantity (0.1% p/p) to initiate the interesterification reaction until completion of the interesterification reaction, identified by analysis of the SFC profile by pulsed NMR.

The cocoa butter thus interesterified was then purified from the residues of catalyst and of soaps by means of a classic work-up process (bland acidification, rinsing with water, filtration with filtration coadjuvants) that is well known in the field.

The solid fat content (SFC) of the interesterified cocoa butter at the temperatures of 10 °C, 20 °C, 25 °C, 30 °C and 35 °C was then measured by pulsed NMR. The measurement was taken according to two methods. The first method (Method 1), in the absence of heat pretreatment, according to the method IUPAC 2.150 (ex 2.323) ("Solid content determination in fats by NMR (Low resolution nuclear magnetic resonance)", point (a) ("Methods for routine use without special thermal pretreatment"); the second method (Method 2), with thermal pretreatment, according to the method IUPAC 2.150 (ex 2.323) ("Solid content determination in fats by NMR (Low resolution nuclear magnetic resonance)", point (b) ("Methods for routine use with special thermal pretreatment"), both in serial measurement and NMR "continuous wave" mode. Moreover, the slip point of the cocoa butter was determined by slip analysis on capillary tube. The slip point of a fat is the temperature at which the fat rises inside a capillary immersed in water, and it was measured according to the method NGD C 73-1989. Its triglyceride profile was also determined with the following method.

A first chromatographic analysis was carried out on the sample of fat to divide the sample in four fractions in which a first fraction contained the POP, PPO and POO triglycerides; a second fraction contained the SOO, PPP, POS, PSO and SPO triglycerides; a third fraction contained the SOS and SSO triglycerides; and a fourth fraction contained all triglycerides not present in the aforementioned fractions from the first to the third (P=palmitic acid; O=oleic acid; S=stearic acid; A=arachidic acid).

For the first analysis, an HPLC Shimadzu system was used, with 4 solvent lines, a degasser, an autosampler, LC solution software coupled with ELSD Alltech 3300 detector and a collector for the fractions. N₂ was used as nebulization gas with flow at 1.4 mL/min, atomization temperature = 38°C.

The Alltima HP C18 HL (150 X 3.0 mm) column was used with particles of 3 µm diameter (Grace Alltech, Lokeren, Belgium); a precolumn (7.5 x 3.0 mm) packed with silica (Grace Alltech, Columbia, MD); and as a mobile phase a solution (dichloromethane/acetonitrile % v/v) was used with variable gradient but with constant flow equal to 0.72 ml/min. The following table (Table A) describes the gradient of the mobile phase as a function of time.

**Table A. Gradient of the mobile phase a function of time in the first step of the determination of triglycerides in the cocoa butter**

| Time (min) | Dichloromethane (% v/v) | Acetonitrile (% v/v) |
|---|---|---|
| 0 | 30 | 70 |
| 25 | 51 | 49 |
| 26 | 70 | 30 |
| 27 | 70 | 30 |
| 28 | 30 | 70 |
| 33 | 30 | 70 |

For each analysis, 6 injections were carried out to obtain sufficient quantities of fractions for the subsequent analyses. Every injection was 40 pL. The temperature of the column was set to 20°C.

The first chromatographic analysis provided the values of the concentrations of the triglycerides in the aforesaid fourth fraction.

The concentration of the triglycerides present in the aforesaid fractions from the first to the third was determined with a second chromatographic analysis on each of the aforesaid fractions in which using the same system used for the aforesaid first analysis with the difference that a ChromSpher 5 Lipids column was used (250 X 4.6 mm) (Varian, Middelburg, The Netherlands); an ion-exchange precolumn was used (10 X 3 mm) (Varian, Middelburg, The Netherlands); the mobile phase was Acetone/Heptane = 2/98 % v/v, the temperature of the column was set to 25°C; and the flow was set to 1.0 ml/min.

The concentrations of fatty acids were determined by means of gas chromatography according to the method described in ISO 5508:2012 ("*Animal and vegetable fats and oils. Analysis by gas chromatography of methyl esters of fatty acids*")*.*

A sample of cocoa butter as such (i.e. not interesterified) was also subjected, as described above, to the measurements of the SFC and of the slip point, for comparison.

For this sample, too, the triglyceride profile was determined as well as its fatty acid profile.

The results obtained are shown in Tables 1 and 2.

**Table 1. Values of solid fat content (SFC) of the cocoa butter and of the interesterified cocoa butter and the respective slip points.**

| | | | | | | |
|---|---|---|---|---|---|---|
| | SFC 10 C̊ | SFC 20 C̊ | SFC 25 C̊ | SFC 30 C̊ | SFC C̊ | Slip point C̊ |
| Cocoa butter (Method 1) | 88 | 56 | 28 | 4 | 9 | 27 |
| Cocoa butter (Method 2) | 79 | 62 | 52 | 29 | 1 | |
| Interesterified cocoa butter (Method 1) | 71 | 66 | 56 | 45 | 33 | 49 |
| Interesterified cocoa butter (Method 2) | 71 | 66 | 56 | 45 | 33 | |

Based on the data provided in Table 1, it is noted that the interesterified cocoa butter, which has non-polymorphic crystallization, has a far higher slip point than cocoa butter as such, which instead has a polymorphic crystallization.

In the case of non interesterified cocoa butter, it is noted that Method 2 has produced higher values of solid fat content for temperatures equal to or greater than 20 °C. This is because cocoa butter as such is a polymorphic fat and its crystallization depends on the heat treatment received; because the heat treatment to which it is subjected in the two methods is different, control of crystallization is not the same at the same temperatures. The interesterified fat loses the polymorphic behavior because of the reorganization of the triglycerides. For this reason, there are no differences in the values between Method 1 and Method 2 for the interesterified cocoa butter.

The interesterified fat thus obtained was introduced into a container with a capacity of 2000 1 provided with stirrer and 400 g of cocoa butter as such were added.

Table 2 shows a comparison between the content of triglycerides of the cocoa butter before and after interesterification, and of the mixture of cocoa butter as such and interesterified cocoa butter.

**Table 2. Comparison between the content of triglycerides of the cocoa butter before and after interesterification, and of the mixture of cocoa butter as such and interesterified cocoa butter in weight ratio 2:3 (P=palmitic acid; O=oleic acid; S=stearic acid, A=arachidic acid)**

| Triglyceride | Content (%) of triglycerides in cocoa butter before interesterification (in weight percent based on the total weight of the triglycerides) | Content (%) of triglycerides in interesterified cocoa butter (in weight percent based on the total weight of the triglycerides) | Content (%) of triglycerides in the mixture of cocoa butter as such and interesterified cocoa butter (in weight percent based on the total weight of the triglycerides) |
|---|---|---|---|
| SSO | | 7.6 | 4.6 |
| SOO | 3 | 7.4 | 5.6 |
| PSS | | 6.2 | 3.7 |
| PSO | | 6.1 | 3.6 |
| POS | 39 | 6.1 | 19.2 |
| SPO | | 6.1 | 3.6 |
| POO | 3 | 5.9 | 4.7 |
| PPS | | 5.0 | 3.0 |
| PPO | | 4.8 | 2.9 |
| SSS | | 3.9 | 2.4 |
| SOS | 27 | 3.8 | 13.1 |
| OSO | | 3.7 | 2.2 |
| OOO | | 3.6 | 2.2 |
| SPS | | 3.1 | 1.9 |
| OPO | | 2.9 | 1.8 |
| PSP | | 2.5 | 1.5 |
| POP | 18 | 2.4 | 8.6 |
| PPP | | 2.0 | 1.2 |
| OTHERS¹ | ≤15 | <15 | <15 |
| Total monounsaturated symmetrical triglycerides | 85 | 12.5 | 40.9 |
| Total monounsaturated symmetrical triglycerides with position 1 and 3 the same | 45 | 6.5 | 21.7 |

| | | | |
|---|---|---|---|
| 1. OTHERS: these are non-symmetrical triglycerides, each present in a quantity lower than 2.3% | | | |

Table 2 shows that the profile of the triglycerides changed markedly. Whereas cocoa butter as such has a small variety of triglycerides, the interesterified cocoa butter has a higher number of combinations of fatty acids, giving rise to numerous different triglycerides.

It is also noted that the number of monounsaturated symmetrical triglycerides drops from 85% to 12.5%, of which the number of those that have the same fatty acids in first and in third position on the glycerol drops from 45% to 6.5%.

With regard to the combination of cocoa butter as such and interesterified, the number of monounsaturated symmetrical triglycerides is equal to 40.9%, of which the number of those that have the same fatty acids in first and in third position on the glycerol is equal to 21.7%.

### EXAMPLE 2

Preparation of the fat phase based on sal butter and interesterified sal butter.

600 g of sal butter were interesterified as described in Example 1 for cocoa butter.

Table 3 shows the results of the measurement of the content of solid fats and of the slip point of the sal butter, similarly to Table 1 shown for Example 1.

**Table 3. Values of solid fat content (SFC) of the sal butter and of the interesterified sal butter and the respective slip points.**

| | SFC 10 °C | SFC 20 °C | SFC 25 °C | SFC 30 °C | SFC 35 °C | Slip point °C |
|---|---|---|---|---|---|---|
| Sal butter (Method 1) | 73 | 54 | 37 | 6 | 4 | 32 |
| Sal butter (Method 2) | 67 | 57 | 55 | 45 | 7 | |
| Interesterified sal butter (Method 1) | 53 | 39 | 38 | 33 | 25 | 49 |
| Interesterified sal butter (Method 2) | 53 | 39 | 38 | 33 | 25 | |

The interesterified fat thus obtained was introduced in a container with a capacity of 1 1 provided with stirrer and 400 g of sal butter as such were added.

Table 4 shows a comparison between the content of triglycerides of the sal butter before and after interesterification, and of the mixture of sal butter as such and interesterified sal butter.

**Table 4. Comparison between the content of triglycerides of the sal butter before and after interesterification and of a mixture of sal butter as such and interesterified sal butter in weight ratio 2:3 (P=palmitic acid; O=oleic acid; S=stearic acid, A=arachidic acid)**

| Triglyceride | Content (%) of triglycerides in sal butter before interesterification (in weight percent based on the total weight of the triglycerides) | Content (%) of triglycerides in interesterified sal butter (in weight percent based on the total weight of the triglycerides) | Content (%) of triglycerides in the mixture of sal butter as such and interesterified sal butter (in weight percent based on the total weight of the triglycerides) |
|---|---|---|---|
| SSO | | 14.5 | 8.7 |
| SOO | 16 | 13.6 | 14.6 |
| SSS | | 7.7 | 4.6 |
| SOS | 48 | 7.2 | 23.5 |
| OSO | | 6.8 | 4.1 |
| OOO | | 6.4 | 3.8 |
| PSS | | 2.5 | 1.5 |
| PSO | | 2.4 | 1.4 |
| POS | 11 | 2.4 | 5.8 |
| SPO | | 2.4 | 1.4 |
| SSA | | 2.3 | 1.4 |
| POO | | 2.2 | 1.3 |
| SOA | 11 | 2.1 | 5.7 |
| SAO | | 2.1 | 1.3 |
| OSA | | 2.1 | 1.3 |
| OOA | | 2.0 | 1.2 |
| SPS | | 1.3 | 0.8 |
| SAS | | 1.1 | 0.7 |
| OPO | | 1.1 | 0.7 |
| OAO | | 1.0 | 0.6 |
| OTHERS¹ | ≤15 | <20 | <15 |
| Total monounsaturated symmetrical triglycerides | 70 | 12 | 35 |
| Total monounsaturated symmetrical triglycerides with position 1 and 3 equal | 48 | 7.5 | 23.5 |

| | | | |
|---|---|---|---|
| 1. OTHERS: these are non-symmetrical triglycerides, each present in a quantity lower than 2.3% | | | |

Table 4 shows that the profile of the triglycerides changed markedly. Whereas sal butter as such has a small variety of triglycerides, the interesterified sal butter has a higher number of combinations of fatty acids, giving rise to numerous different triglycerides.

It is also noted that the number of monounsaturated symmetrical triglycerides drops from 70% to 12%, of which the number of those that have the same fatty acids in first and in third position on the glycerol drops from 48% to 7.5%.

With regard to the combination of sal butter as such and interesterified, the number of monounsaturated symmetrical triglycerides is equal to 35%, of which the number of those that have the same fatty acids in first and in third position on the glycerol is equal to 23.5%.

### EXAMPLE 3

Preparation of a whipping vegetable cream based on cocoa butter

240 kg of the fat phase obtained according to Example 1 were heated to 65 °C and the emulsifiers Datem (E472e- mono- and diacetyl tartaric esters of the mono- and diglycerides of the fatty acids) and Lactem (E472b lactic esters of the mono- and diglycerides of the fatty acids) in the quantities shown in Table 5 were added until they were completely dissolved.

An aqueous phase was prepared separately, in the following way.

In a container with a capacity of 2000 liters provided with stirrer (FLEX-MIX LIQUIVERTER SPX), the (softened) water was poured in the quantity indicated in Table 5 (at 20 °C) and to the water were added Hydroxy propyl cellulose (E463) in the quantities shown in Table 5, and a portion (50 kg) of the quantity of sucrose shown in Table 5 and the ingredients were mixed at a temperature of 20 °C for 30 minutes. The mixture, still under stirring (5000 rpm), was then heated to 40 °C and the milk proteins were added, in the quantity indicated in Table 5.

To the aqueous phase, heated to 60°C, the fat phase comprising the emulsifiers was added and the remaining aliquot of sucrose was added, with continuous stirring (5000 rpm), and the remaining ingredients, in the quantities indicated in Table 5 thus obtaining, after approximately 40 minutes, a homogeneous mixture.

**Table 5. Composition of the vegetable cream**

| Ingredient | Quantity in percentage by weight on the total weight of the liquid phase |
|---|---|
| Softened water | 60.12% |
| Milk proteins | 0.7% |
| Datem (E472e) | 0.4% |
| Lactem (E472b) | 0.1% |
| Hydroxy propyl cellulose (E463) | 0.28% |
| Sucrose | 14% |
| Potassium phosphate, dibasic (E340) | 0.1% |
| Salt | 0.1% |
| Lecithin | 0.2% |
| Cocoa butter | 10% |
| Interesterified cocoa butter | 14% |

The mixture thus obtained was subjected to sterilization by uperization with direct method at 140 °C for 4 seconds.

The sterilized mixture thus obtained was transferred into a homogenizer (Gaulin) and subjected to homogenization at 200 bar at 50 °C, thus obtaining an emulsion.

The emulsion thus obtained was subsequently cooled to 15 °C and then packaged in 200 ml tetrabrik and stored at 20 °C.

### EXAMPLE 4

### Preparation of a whipping vegetable cream based on sal butter

A cream according to Example 3 was prepared with the difference that sal butter was used as fat instead of cocoa butter.

### EXAMPLE 5

### Experimental whipping tests

The emulsions produced in Examples 3 and 4, and three commercial UHT products (Formulations 1-3, described hereafter) in which the fat phase consists of fractions of palm oil and palm kernel oil were cooled to 4 °C and then whipped at the following whipping conditions.

Formulation 1 Ingredients: Water, fully hydrogenated fat (palm kernel), sugar %, milk proteins, stabilizers: sorbitol syrup, E463, emulsifiers: E472e, soy lecithin, E472b, salt, flavoring, beta carotene coloring agent.

Formulation 2 Ingredients:
Water, fully hydrogenated fat (palm kernel), sugar, sodium caseinate, sorbitol syrup, stabilizer (E463), emulsifiers (E472e, soy lecithin, E435), acidity regulators (E339, E331), salt, flavorings.

Formulation 3 Ingredients:
Water, fully hydrogenated fat (palm kernel), sugar, milk proteins, salt, stabilizers: sorbitol, E463, emulsifiers: (E472e, soy lecithin, E472b), flavors.

500 ml of each emulsion were poured into a Hobart N50 planetary mixer (5 liter capacity) and the whip was actuated at speed 2 (281 rpm). Whipping was carried out at a temperature comprised between 4 and 8°C.

For each cream, the time taken to reach the optimal consistency was recorded.

After whipping, the percentage of overrun obtained for each sample was measured.

Table 6 summarizes the data obtained, in which the formulations indicated with A and B represent respectively the cream of Example 3 and of Example 4, the formulations designated with the numerals 1, 2 and 3 represent the aforesaid commercial creams.

**Table 6. Results of the times and of values of overrun for the formulations A, B, 1, 2, and 3**

| Formulation | Time to reach optimal consistency | Value of overrun obtained |
|---|---|---|
| A | 440 seconds | 220% |
| B | 410 seconds | 233% |
| 1 | 370 seconds | 233% |
| 2 | 380 seconds | 250% |
| 3 | 460 seconds | 200% |

Table 6 shows that the whipping times and the overruns obtained for the formulations A and B are comparable to the commercial products 1-3.

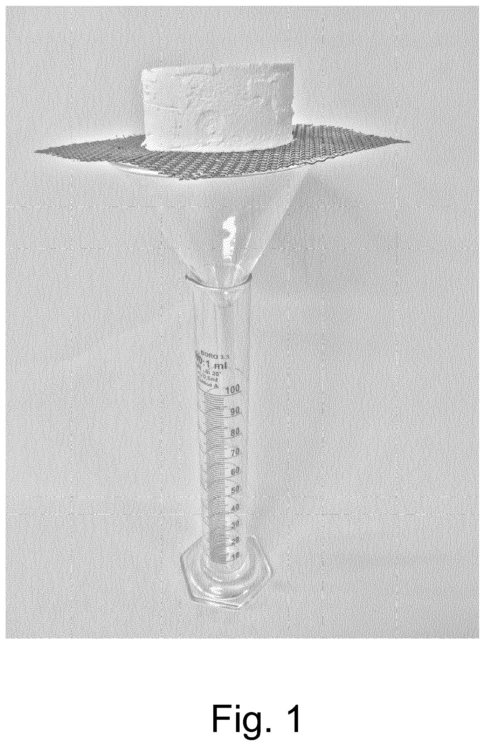

As shown in Figure 1, moreover, the whipped cream A had a satisfactory color, being a white comparable to that of conventional dairy cream.

Moreover, upon tasting, the cream had excellent textural features, being homogeneous and soft to the palate. Upon tasting, no undesired granularity was perceived.

Cream B showed the same organoleptic characteristics. It should be noted that for this cream, a greater overrun was recorded with shorter whipping times.

### EXAMPLE 6

### Experimental stability tests

The whipped creams of the formulations A, B, 1-3 were subjected to a stability test. To measure stability, 50 g of each whipped cream were placed in a Büchner filter, in turn positioned on a graduated cylinder and incubated at 20 °C (set-up of the experiment shown in Figure 1). After 24 hours, the quantity (in ml) of liquid in the cylinder was measured.

The samples that had less than 2.5 ml of liquid were considered satisfactory. The samples that had more than 2.5 ml of liquid were considered unsatisfactory.

The samples that had no liquid were considered optimal.

Table 7 summarizes the results obtained.

**Table 7. Stability results for the whipped creams A, B, 1-3**

| Formulation | Liquid separated from the formulation with optimal overrun after 24 hours at 20°C (ml) | Evaluation on stability |
|---|---|---|
| A | ≤ 2.5 | Satisfactory |
| B | ≤ 2.5 | Satisfactory |
| 1 | ≤ 2.5 | Satisfactory |
| 2 | 0 | Optimal |
| 3 | ≤ 2.5 | Satisfactory |

Non-whipped cream A (Example 3) was subjected to a stability test of the emulsion by rheological analysis with controlled-stress rotational rheometer produced by Thermo Scientific, Haake Rheo Stress 6000 model. The cream is subjected to dynamic test.

To determine the time-dependent effects, a test was carried out with constant deformation speed gradient over time, setting the temperature to 15 °C, with maximum deviation of 0.10 °C, and maximum wait time of 300s for the attainment of the temperature.

The following cycles were employed: a) 200 s⁻¹ for 180 s; b) 0 s⁻¹ for 420 s; c) 200 s⁻¹ for 180 s; d) 10 s⁻¹ for 180 s; e) 50 s⁻¹ for 180 s; f) 10 s⁻¹ for 180 s; g) 50 s⁻¹ for 180 s.

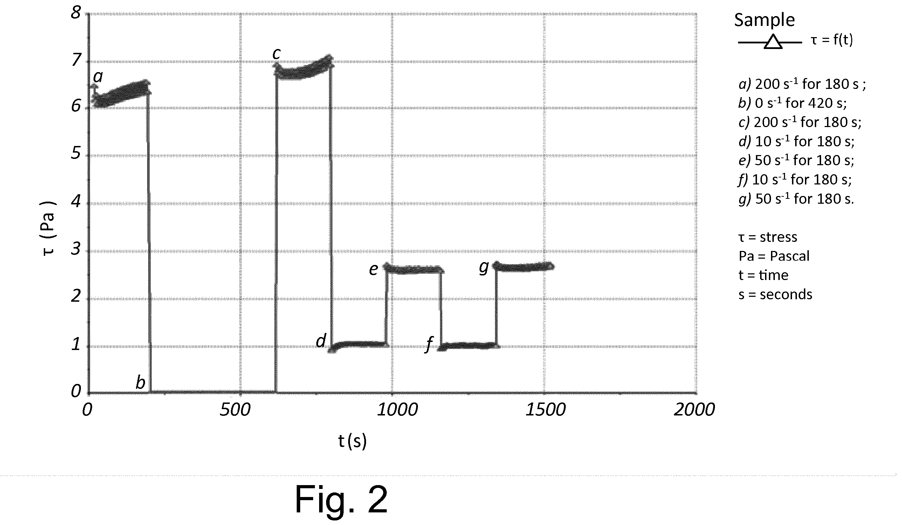

The results are observable in Figure 2. It is observed that the emulsion shows horizontal peaks repeated over time for each value of deformation speed. This result thus shows that the emulsion shows stability over time.

## Claims

1. An oil-in-water food emulsion comprising, in weight percent based on the total weight of the emulsion, between 15 and 45% of a fat phase, said fat phase comprising glycerides wherein at least 65% of the chains deriving from fatty acids, in weight percent based on the total of weight of said chains, are chains having 18 carbon atoms, wherein said glycerides represent the totality of the glycerides of said fat phase; and at least one emulsifier; wherein said fat phase comprises a mixture of: a vegetable fat as such or a vegetable oil as such A comprising glycerides wherein at least 65% of the chains deriving from fatty acids, in weight percent based on the total weight of said chains, are chains having 18 carbon atoms; and a vegetable fat or vegetable oil B obtained from the interesterification of a vegetable fat as such or vegetale oil as such comprising glycerides wherein at least 65% of the chains deriving from fatty acids, in weight percent based on the total weight of said chains, are chains having 18 carbon atoms; and wherein said food emulsion is a vegetable whipping cream; wherein said fat phase comprises, in weight percent based on the total weight of the glycerides, between 25 and 60% of monounsaturated symmetrical triglycerides; wherein said glycerides comprise, in weight percent based on the total weight of the glycerides, between 20 and 60% of stearic acid; wherein said vegetable fat as such or vegetable oil as such A and said vegetable fat or vegetable oil B obtained from interesterification of a vegetable fat as such or vegetable oil as such are present in said fat phase in a weight ratio comprised between 0.3 and 3; wherein said glycerides comprise, in weight percent based on the total weight of the glycerides,at least 95% of triglycerides; and wherein a vegetable fat as such or vegetable oil as such is a refined fat or a refined oil that has not been subjected to an interesterification process.

2. An oil-in-water food emulsion according to claim 1, wherein said glycerides comprise, in weight percent based on the total weight of the chains deriving from fatty acids, between 70 and 95%, preferably between 75 and 90%, more preferably between 80 and 85% of chains having 18 carbon atoms deriving from fatty acids.

3. An oil-in-water food emulsion according to claim 1 or 2, wherein said glycerides comprise, in weight percent based on the total weight of the chains deriving from fatty acids, between 25 and 55%, preferably between 30 and 50%, of stearic acid.

4. An oil-in-water food emulsion according to any one of the previous claims, wherein said glycerides comprise, in weight percent based on the total weight of the chains deriving from fatty acids, less than 85%, preferably between 40 and 75%, more preferably between 50 and 65%, of chains deriving from saturated fatty acids.

5. An oil-in-water food emulsion according to any one of the previous claims, wherein said fat phase comprises, in weight percent based on the total weight of the glycerides, between 30 and 55% of monounsaturated symmetrical triglycerides.

6. An oil-in-water food emulsion according to any one of the previous claims, wherein said vegetable fat as such or vegetable oil as such A is cocoa butter as such and said vegetable fat or vegetable oil B obtained from the interesterification of a vegetable fat as such or vegetable oil as such is interesterified cocoa butter, preferably in a weight ratio between the cocoa butter as such and the interesterified cocoa butter comprised between 0.1 and 1, more preferably comprised between 0.3 and 0.8, even more preferably comprised between 0.5 and 0.75.

7. An oil-in-water food emulsion according to any one of the claims 1 to 5, wherein said vegetable fat as such or vegetable oil as such A is sal butter as such and said vegetable fat or vegetable oil B obtained from the interesterification of a vegetable fat as such or vegetable oil as such is interesterified sal butter, preferably in a weight ratio between the sal butter as such and the interesterified sal butter comprised between 0,1 and 1, more preferably comprised between 0,3 and 0,8, even more preferably comprised between 0.5 and 0.75.

8. Whipped vegetable cream obtainable through whipping of the oil-in-water food emulsion according to any one of claims 1 to 7.

9. Process for the production of an oil-in-water food emulsion according to any one of claims 1 to 7, comprising the steps of:
a) making available a fat phase comprising glycerides wherein at least 65% of the chains deriving from fatty acids, in weight percentage based on the total weight of the chains, are chains having 18 carbon atoms, wherein said glycerides represent the totality of the glycerides of said fat phase;
b) mixing said fat phase of step a) with an aqueous phase, at a temperature comprised between 50 and 90 °C, until a mixture is formed;
c) homogenizing the mixture thus obtained thus forming an emulsion; and
d) cooling the emulsion thus obtained;
wherein said fat phase of step a) is obtained by mixing a vegetable fat as such or vegetable oil as such A comprising glycerides wherein at least 65% of the chains deriving from fatty acids, in weight percent based on the total weight of the chains, are chains having 18 carbon atoms and a vegetable fat or vegetable oil B obtained from the interesterification of a vegetable fat as such or vegetable oil as such comprising glycerides wherein at least 65% of the chains deriving from fatty acids, in weight percent based on the total weight of the chains, are chains having 18 carbon atoms; wherein said fat phase comprises, in weight percent based on the total weight of the glycerides, between 25 and 60% of monounsaturated symmetrical triglycerides; wherein said glycerides comprise, in weight percent based on the total weight of the glycerides, between 20 and 60% of stearic acid; wherein said vegetable fat as such or vegetable oil as such A and said vegetable fat or vegetable oil B obtained from interesterification of a vegetable fat as such or vegetable oil as such are present in said fat phase in a weight ratio comprised between 0.3 and 3; wherein said glycerides comprise, in weight percent based on the total weight of the glycerides,at least 95% of triglycerides; and wherein a vegetable fat as such or vegetable oil as such is a refined fat or a refined oil that has not been subjected to an interesterification process.

10. Process according to claim 9, wherein said cooling step d) is preceded by a heat treatment step of said mixture obtained in step b) or of said emulsion obtained in step c), preferably a pasteurization or a sterilization step.

11. Use of a fat phase comprising glycerides wherein at least 65% of the chains deriving from fatty acids, in weight percent based on the total weight of the chains, are chains having 18 carbon atoms, wherein said glycerides represent the totality of the glycerides of said fat phase; and which comprises a mixture of: a vegetable fat as such or vegetable oil as such A comprising glycerides wherein at least 65% of the chains deriving from fatty acids, in weight percent based on the total weight of said chains, are chains having 18 carbon atoms; and a vegetable fat or vegetable oil B obtained from the interesterification of a vegetable fat as such or vegetable oil as such comprising glycerides wherein at least 65% of the chains deriving from fatty acids, in weight percent based on the total weight of said chains, are chains having 18 carbon atoms, for the production of a food vegetable cream; wherein said food vegetable cream is a vegetable whipping cream; wherein said fat phase comprises, in weight percent based on the total weight of the glycerides, between 25 and 60% of monounsaturated symmetrical triglycerides; wherein said glycerides comprise, in weight percent based on the total weight of the glycerides, between 20 and 60% of stearic acid; wherein said vegetable fat as such or vegetable oil as such A and said vegetable fat or vegetable oil B obtained from interesterification of a vegetable fat as such or vegetable oil as such are present in said fat phase in a weight ratio comprised between 0.3 and 3; wherein said glycerides comprise, in weight percent based on the total weight of the glycerides,at least 95% of triglycerides; and wherein a vegetable fat as such or vegetable oil as such is a refined fat or a refined oil that has not been subjected to an interesterification process.

12. Use of the oil-in-water food emulsion according to any one of claims 1 to 7 for the preparation of food products.

## Patentansprüche

1. ÖI-in-Wasser-Lebensmittelemulsion umfassend, in Gewichtsprozent basierend auf dem Gesamtgewicht der Emulsion, zwischen 15 und 45 % einer Fettphase, wobei die Fettphase Glyzeride umfasst, wobei mindestens 65 % der von Fettsäuren abgeleiteten Ketten, in Gewichtsprozent basierend auf dem Gesamtgewicht der Ketten, Ketten mit 18 Kohlenstoffatomen sind, wobei die Glyzeride die Gesamtheit der Glyzeride der Fettphase darstellen; und mindestens einen Emulgator; wobei die Fettphase eine Mischung umfasst die aus: einem pflanzlichen Fett als solchen oder einem pflanzlichen Öl als solches A umfassend Glyzeride besteht, wobei mindestens 65% der von Fettsäuren abgeleiteten Ketten, in Gewichtsprozent basierend auf dem Gesamtgewicht der Ketten, Ketten mit 18 Kohlenstoffatomen sind; und einem pflanzlichen Fett oder pflanzlichen Öl B, das durch die Umesterung eines pflanzlichen Fettes als solches oder eines pflanzlichen Öls als solches, umfassend Glyzeride erhalten wird, wobei mindestens 65% der von Fettsäuren abgeleiteten Ketten, in Gewichtsprozent basierend auf dem Gesamtgewicht der Ketten, Ketten mit 18 Kohlenstoffatomen sind; und wobei die Lebensmittelemulsion eine pflanzliche Schlagsahne ist; wobei die Fettphase in Gewichtsprozent basierend auf dem Gesamtgewicht der Glyzeride, zwischen 25 und 60 % mono-ungesättigter symmetrischer Triglyzeride umfasst; wobei die Glyzeride in Gewichtsprozent basierend auf dem Gesamtgewicht der Glyzeride, zwischen 20 und 60 % Stearinsäure umfassen; wobei das pflanzliche Fett als solches oder das pflanzliche Öl als solches A und das pflanzliche Fett oder das pflanzliche Öl B, das durch die Umesterung eines pflanzlichen Fettes als solches oder eines pflanzlichen Öls als solches erhalten wird, in der Fettphase in einem Gewichtsverhältnis zwischen 0.3 und 3 vorhanden sind; wobei die Glyzeride in Gewichtsprozent, basierend auf dem Gesamtgewicht der Glyzeride, mindestens 95 % Triglyzeride umfassen; und wobei ein pflanzliches Fett als solches oder ein pflanzliches Öl als solches ein raffiniertes Fett oder ein raffiniertes Öl ist, das nicht einem Umesterungsverfahren unterzogen worden ist.

2. ÖI-in-Wasser-Lebensmittelemulsion nach Anspruch 1, wobei die Glyzeride in Gewichtsprozent basierend auf dem Gesamtgewicht der von Fettsäuren abgeleiteten Ketten, zwischen 70 und 95 %, vorzugsweise zwischen 75 und 90 %, noch bevorzugter zwischen 80 und 85 % von Fettsäuren abgeleitete Ketten mit 18 Kohlenstoffatomen umfassen.

3. ÖI-in-Wasser-Lebensmittelemulsion nach Anspruch 1 oder 2, wobei die Glyzeride in Gewichtsprozent basierend auf dem Gesamtgewicht der von Fettsäuren abgeleiteten Ketten, zwischen 25 und 55%, vorzugsweise zwischen 30 und 50%, Stearinsäure enthalten.

4. ÖI-in-Wasser-Lebensmittelemulsion nach einem der vorhergehenden Ansprüche, wobei die Glyzeride in Gewichtsprozent basierend auf dem Gesamtgewicht der von Fettsäuren abgeleiteten Ketten, weniger als 85 %, vorzugsweise zwischen 40 und 75 %, noch bevorzugter zwischen 50 und 65 %, von gesättigten Fettsäuren abgeleitete Ketten umfassen.

5. ÖI-in-Wasser-Lebensmittelemulsion nach einem der vorhergehenden Ansprüche, wobei die Fettphase in Gewichtsprozent basierend auf dem Gesamtgewicht der Glyzeride, zwischen 30 und 55 % mono-ungesättigter symmetrischer Triglyzeride umfasst.

6. ÖI-in-Wasser-Lebensmittelemulsion nach einem der vorhergehenden Ansprüche, wobei das pflanzliche Fett als solches oder das pflanzliche Öl als solches A Kakaobutter als solches ist und das pflanzliche Fett oder das pflanzliche Öl B, das durch die Umesterung eines pflanzlichen Fettes als solches oder eines pflanzlichen Öls als solches erhalten wird, umgeesterte Kakaobutter ist, vorzugsweise in einem Gewichtsverhältnis zwischen der Kakaobutter als solcher und der umgeesterten Kakaobutter, das zwischen 0,1 und 1, besonders bevorzugt zwischen 0. 3 und 0. 8, noch bevorzugter zwischen 0,5 und 0,75 liegt.

7. ÖI-in-Wasser-Lebensmittelemulsion nach einem der Ansprüche 1 bis 5, wobei das pflanzliche Fett als solches oder das pflanzliche Öl als solches A Salzbutter als solches ist und das pflanzliche Fett oder das pflanzliche Öl B, das durch die Umesterung eines pflanzlichen Fettes als solches oder eines pflanzlichen Öls als solches erhalten wird, umgeesterte Salzbutter ist, vorzugsweise in einem Gewichtsverhältnis zwischen der Salzbutter als solcher und der umgeesterten Salzbutter, das zwischen 0,1 und 1, weiter bevorzugt zwischen 0,3 und 0,8, noch weiter bevorzugt zwischen 0,5 und 0,75 liegt.

8. Pflanzliche Schlagsahne, die durch Aufgehen der Öl-in-Wasser-Lebensmittelemulsion nach einem der Ansprüche 1 bis 7 erhalten wird.

9. Verfahren zur Herstellung einer ÖI-in-Wasser-Lebensmittelemulsion nach einem der Ansprüche 1 bis 7, umfassend die folgenden Schritte:
a) Bereitstellen einer Fettphase umfassend Glyzeride, wobei mindestens 65 % der von Fettsäuren abgeleiteten Ketten, in Gewichtsprozent basierend auf dem Gesamtgewicht der Ketten, Ketten mit 18 Kohlenstoffatomen sind, wobei die Glyzeride die Gesamtheit der Glyzeride der Fettphase darstellen;
b) Mischen der Fettphase aus Schritt a) mit einer wässrigen Phase bei einer Temperatur zwischen 50 und 90 °C, bis eine Mischung gebildet wird;
c) Homogenisieren der so erhaltenen Mischung unter Bildung einer Emulsion; und
d) Abkühlen der so erhaltenen Emulsion;
wobei die Fettphase aus Schritt a) durch Mischen eines pflanzlichen Fettes als solches oder eines pflanzlichen Öls als solches A umfassend Glyzeride erhalten wird, wobei mindestens 65% der von Fettsäuren abgeleiteten Ketten, in Gewichtsprozent basierend auf dem Gesamtgewicht der Ketten, Ketten mit 18 Kohlenstoffatomen sind, und eines pflanzlichen Fettes oder pflanzlichen Öls B, das durch Umesterung eines pflanzlichen Fettes als solches oder eines pflanzlichen Öls als solches umfassend Glyzeride erhalten wird, wobei mindestens 65% der von Fettsäuren abgeleiteten Ketten, in Gewichtsprozent basierend auf dem Gesamtgewicht der Ketten, Ketten mit 18 Kohlenstoffatomen sind; wobei die Fettphase in Gewichtsprozent basierend auf dem Gesamtgewicht der Glyzeride, zwischen 25 und 60 % mono-ungesättigter symmetrischer Triglyzeride umfasst; wobei die Glyzeride in Gewichtsprozent basierend auf dem Gesamtgewicht der Glyzeride, zwischen 20 und 60 % Stearinsäure umfassen; wobei das pflanzliche Fett als solches oder das pflanzliche Öl als solches A und das pflanzliche Fett oder das pflanzliche Öl B, das durch Umesterung eines pflanzlichen Fettes als solches oder eines pflanzlichen Öls als solches erhalten wird, in der Fettphase in einem Gewichtsverhältnis zwischen 0.3 und 3 vorhanden sind; wobei die Glyzeride in Gewichtsprozent basierend auf dem Gesamtgewicht der Glyzeride, mindestens 95 % Triglyzeride umfassen; und wobei ein pflanzliches Fett als solches oder ein pflanzliches Öl als solches ein raffiniertes Fett oder ein raffiniertes Öl ist, das nicht einem Umesterungsverfahren unterzogen worden ist.

10. Verfahren nach Anspruch 9, wobei dem Abkühlungsschritt d) ein Wärmebehandlungsschritt der im Schritt b) erhaltenen Mischung oder der im Schritt c) erhaltenen Emulsion vorausgeht, vorzugsweise ein Pasteurisierungs-oder Sterilisierungsschritt.

11. Verwendung einer Fettphase umfassend Glyzeride, wobei mindestens 65 % der von Fettsäuren abgeleiteten Ketten, in Gewichtsprozent basierend auf dem Gesamtgewicht der Ketten, Ketten mit 18 Kohlenstoffatomen sind, wobei die Glyzeride die Gesamtheit der Glyzeride der Fettphase darstellen; und die eine Mischung umfasst, die aus: einem pflanzlichen Fett als solches oder einem pflanzlichen Öl als solches A, umfassend Glyceride besteht, wobei mindestens 65% der von Fettsäuren abgeleiteten Ketten, in Gewichtsprozent basierend auf dem Gesamtgewicht der Ketten, Ketten mit 18 Kohlenstoffatomen sind; und einem pflanzlichen Fett oder pflanzlichen Öl B, das durch die Umesterung eines pflanzlichen Fettes als solches oder eines pflanzlichen Öls als solches umfassend Glyzeride erhalten wird, wobei mindestens 65% der von Fettsäuren abgeleiteten Ketten, in Gewichtsprozent basierend auf dem Gesamtgewicht der Ketten, Ketten mit 18 Kohlenstoffatomen sind, zur Herstellung einer pflanzlichen Lebensmittelcreme; wobei die pflanzliche Lebensmittelcreme eine pflanzliche Schlagsahne ist; wobei die Fettphase in Gewichtsprozent basierend auf dem Gesamtgewicht der Glyzeride, zwischen 25 und 60 % mono-ungesättigter symmetrischer Triglyceride umfasst; wobei die Glyzeride in Gewichtsprozent basierend auf dem Gesamtgewicht der Glyzeride, zwischen 20 und 60 % Stearinsäure umfassen; wobei das pflanzliche Fett als solches oder das pflanzliche Öl als solches A und das pflanzliche Fett oder das pflanzliche Öl B, das durch Umesterung eines pflanzlichen Fettes als solches oder eines pflanzlichen Öls als solches erhalten wird, in der Fettphase in einem Gewichtsverhältnis zwischen 0.3 und 3 vorhanden sind; wobei die Glyzeride in Gewichtsprozent, basierend auf dem Gesamtgewicht der Glyzeride, mindestens 95 % Triglyzeride umfassen; und wobei ein pflanzliches Fett als solches oder ein pflanzliches Öl als solches ein raffiniertes Fett oder ein raffiniertes Öl ist, das nicht einem Umesterungsverfahren unterzogen worden ist.

12. Verwendung der ÖI-in-Wasser-Lebensmittelemulsion nach einem der Ansprüche 1 bis 7 zur Herstellung von Lebensmittelprodukten.

## Revendications

1. Émulsion alimentaire huile dans eau comprenant, en pourcentage en poids par rapport au poids total de l'émulsion, entre 15 et 45 % d'une phase grasse, ladite phase grasse comprenant des glycérides dont au moins 65 % des chaînes dérivant d'acides gras, en pourcentage en poids par rapport au poids total desdites chaînes, sont des chaînes ayant 18 atomes de carbone, lesdits glycérides représentant la totalité des glycérides de ladite phase grasse; et au moins un émulsifiant; dans laquelle ladite phase grasse comprend un mélange de: une graisse végétale telle quelle ou une huile végétale telle quelle A comprenant des glycérides dont au moins 65 % des chaînes dérivant d'acides gras, en pourcentage en poids par rapport au poids total desdites chaînes, sont des chaînes ayant 18 atomes de carbone; et une graisse végétale ou une huile végétale B obtenue par interestérification d'une graisse végétale telle quelle ou d'une huile végétale telle quelle comprenant des glycérides dont au moins 65 % des chaînes dérivant d'acides gras, en pourcentage en poids par rapport au poids total desdites chaînes, sont des chaînes ayant 18 atomes de carbone; et dans laquelle ladite émulsion alimentaire est une crème fouettée végétale; dans laquelle ladite phase grasse comprend, en pourcentage en poids par rapport au poids total des glycérides, entre 25 et 60 % de triglycérides symétriques monoinsaturés; dans laquelle lesdits glycérides comprennent, en pourcentage en poids par rapport au poids total des glycérides, entre 20 et 60 % d'acide stéarique; dans laquelle ladite graisse végétale en tant que telle ou huile végétale en tant que telle A et ladite graisse végétale ou huile végétale B obtenue par interestérification d'une graisse végétale en tant que telle ou d'une huile végétale en tant que telle sont présentes dans ladite phase grasse dans un rapport pondéral compris entre 0,3 et 3; dans laquelle lesdits glycérides comprennent, en pourcentage en poids par rapport au poids total des glycérides, au moins 95 % de triglycérides ; et dans laquelle une graisse végétale telle quelle ou une huile végétale telle quelle est une graisse raffinée ou une huile raffinée qui n'a pas été soumise à un processus d'interestérification.

2. Émulsion alimentaire huile dans eau selon la revendication 1, dans laquelle lesdits glycérides comprennent, en pourcentage en poids par rapport au poids total des chaînes dérivant des acides gras, entre 70 et 95 %, de préférence entre 75 et 90 %, plus préférentiellement entre 80 et 85 % de chaînes ayant 18 atomes de carbone dérivant des acides gras.

3. Émulsion alimentaire huile dans eau selon la revendication 1 ou 2, dans laquelle lesdits glycérides comprennent, en pourcentage en poids par rapport au poids total des chaînes dérivant des acides gras, entre 25 et 55 %, de préférence entre 30 et 50 %, d'acide stéarique.

4. Émulsion alimentaire huile dans eau selon l'une quelconque des revendications précédentes, dans laquelle lesdits glycérides comprennent, en pourcentage en poids par rapport au poids total des chaînes dérivant d'acides gras, moins de 85 %, de préférence entre 40 et 75 %, plus préférentiellement entre 50 et 65 %, de chaînes dérivant d'acides gras saturés.

5. Emulsion alimentaire huile dans eau selon l'une quelconque des revendications précédentes, dans laquelle ladite phase grasse comprend, en pourcentage en poids par rapport au poids total des glycérides, entre 30 et 55 % de triglycérides symétriques monoinsaturés.

6. Emulsion alimentaire huile dans eau selon l'une quelconque des revendications précédentes, dans laquelle ladite graisse végétale telle quelle ou huile végétale telle quelle A est le beurre de cacao tel quel et ladite graisse végétale ou huile végétale B obtenue par interestérification d'une graisse végétale telle quelle ou d'une huile végétale telle quelle est le beurre de cacao interestérifié, de préférence dans un rapport pondéral entre le beurre de cacao tel quel et le beurre de cacao interestérifié compris entre 0,1 et 1, plus préférentiellement compris entre 0, 3 et 0, 8, de préférence encore entre 0,5 et 0,75.

7. Emulsion alimentaire huile dans eau selon l'une quelconque des revendications 1 à 5, dans laquelle ladite graisse végétale telle quelle ou huile végétale telle quelle A est le beurre de sel tel quel et ladite graisse végétale ou huile végétale B obtenue par interestérification d'une graisse végétale telle quelle ou d'une huile végétale telle quelle est le beurre de sel interestérifié, de préférence dans un rapport pondéral entre le beurre de sel tel quel et le beurre de sel interestérifié compris entre 0,1 et 1, plus préférentiellement compris entre 0,3 et 0,8, encore plus préférentiellement compris entre 0,5 et 0,75.

8. Crème végétale fouettée obtenue par fouettage de l'émulsion alimentaire huile dans eau selon l'une quelconque des revendications 1 à 7.

9. Procédé de fabrication d'une émulsion alimentaire huile dans eau selon l'une quelconque des revendications 1 à 7, comprenant les étapes suivantes:
a) mettre à disposition une phase grasse comprenant des glycérides dont au moins 65 % des chaînes dérivant d'acides gras, en pourcentage en poids par rapport au poids total des chaînes, sont des chaînes à 18 atomes de carbone, lesdits glycérides représentant la totalité des glycérides de ladite phase grasse;
b) mélanger ladite phase grasse de l'étape a) avec une phase aqueuse, à une température comprise entre 50 et 90°C, jusqu'à obtention d'un mélange;
c) homogénéiser le mélange ainsi obtenu pour former une émulsion; et
d) refroidir l'émulsion ainsi obtenue;
dans laquelle ladite phase grasse de l'étape a) est obtenue par mélange d'une graisse végétale telle quelle ou d'une huile végétale telle quelle A comprenant des glycérides dont au moins 65 % des chaînes dérivant d'acides gras, en pourcentage en poids par rapport au poids total des chaînes, sont des chaînes ayant 18 atomes de carbone et d'une graisse végétale ou d'une huile végétale B obtenue par interestérification d'une graisse végétale telle quelle ou d'une huile végétale telle quelle comprenant des glycérides dont au moins 65 % des chaînes dérivant d'acides gras, en pourcentage en poids par rapport au poids total des chaînes, sont des chaînes ayant 18 atomes de carbone; dans laquelle ladite phase grasse comprend, en pourcentage en poids par rapport au poids total des glycérides, entre 25 et 60 % de triglycérides symétriques monoinsaturés; dans laquelle lesdits glycérides comprennent, en pourcentage en poids par rapport au poids total des glycérides, entre 20 et 60 % d'acide stéarique; dans laquelle ladite graisse végétale telle quelle ou huile végétale telle quelle A et ladite graisse végétale ou huile végétale B obtenue par interestérification d'une graisse végétale telle quelle ou d'une huile végétale telle quelle sont présentes dans ladite phase grasse dans un rapport pondéral compris entre 0,3 et 3; dans laquelle lesdits glycérides comprennent, en pourcentage en poids par rapport au poids total des glycérides, au moins 95 % de triglycérides; et dans laquelle une graisse végétale telle quelle ou une huile végétale telle quelle est une graisse raffinée ou une huile raffinée qui n'a pas été soumise à un processus d'interestérification.

10. Procédé selon la revendication 9, dans lequel ladite étape de refroidissement d) est précédée d'une étape de traitement thermique dudit mélange obtenu à l'étape b) ou de ladite émulsion obtenue à l'étape c), de préférence une étape de pasteurisation ou de stérilisation.

11. Utilisation d'une phase grasse comprenant des glycérides dont au moins 65 % des chaînes dérivant des acides gras, en pourcentage en poids par rapport au poids total des chaînes, sont des chaînes ayant 18 atomes de carbone, dans laquelle lesdits glycérides représentent la totalité des glycérides de ladite phase grasse; et qui comprend un mélange de: une graisse végétale telle quelle ou une huile végétale telle quelle A comprenant des glycérides dont au moins 65 % des chaînes dérivant des acides gras, en pourcentage en poids par rapport au poids total desdites chaînes, sont des chaînes ayant 18 atomes de carbone; et une graisse végétale ou une huile végétale B obtenue par interestérification d'une graisse végétale telle quelle ou d'une huile végétale telle quelle comprenant des glycérides dont au moins 65 % des chaînes dérivant des acides gras, en pourcentage en poids par rapport au poids total desdites chaînes, sont des chaînes ayant 18 atomes de carbone, pour la production d'une crème végétale alimentaire; dans laquelle ladite crème végétale alimentaire est une crème fouettée végétale; dans laquelle ladite phase grasse comprend, en pourcentage en poids par rapport au poids total des glycérides, entre 25 et 60 % de triglycérides symétriques monoinsaturés; dans laquelle lesdits glycérides comprennent, en pourcentage en poids par rapport au poids total des glycérides, entre 20 et 60 % d'acide stéarique; dans laquelle ladite graisse végétale en tant que telle ou huile végétale en tant que telle A et ladite graisse végétale ou huile végétale B obtenue par interestérification d'une graisse végétale en tant que telle ou d'une huile végétale en tant que telle sont présentes dans ladite phase grasse dans un rapport pondéral compris entre 0,3 et 3; dans laquelle lesdits glycérides comprennent, en pourcentage en poids par rapport au poids total des glycérides, au moins 95 % de triglycérides; et dans laquelle une graisse végétale telle quelle ou une huile végétale telle quelle est une graisse raffinée ou une huile raffinée qui n'a pas été soumise à un processus d'interestérification.

12. Utilisation de l'émulsion alimentaire huile dans eau selon l'une quelconque des revendications 1 à 7 pour la préparation de produits alimentaires.
